# EUROPÄISCHE PATENTSCHRIFT

(11) **EP 3 287 325 B1**
(45) Veröffentlichungstag und Bekanntmachung des Hinweises auf die Patenterteilung: **19.09.2018**
(21) Anmeldenummer: 17000833.8
(22) Anmeldetag: 16.05.2017
(51) Int. Cl.: B60R 19/18, B60R 19/26, B60R 19/24

(54) **KRAFTFAHRZEUG UND BEFESTIGUNGSVORRICHTUNG FÜR EIN KRAFTFAHRZEUG**
MOTOR VEHICLE AND FIXING DEVICE FOR A MOTOR VEHICLE
VÉHICULE AUTOMOBILE ET DISPOSITIF DE FIXATION POUR UN VÉHICULE AUTOMOBILE

(30) Priorität: 26.08.2016 DE 102016010356
(43) Veröffentlichungstag der Anmeldung: 28.02.2018
(73) Patentinhaber: AUDI AG, 85045 Ingolstadt (DE)
(72) Erfinder: Schulz, Markus, 85080 Gaimersheim (DE)

(56) Entgegenhaltungen:
- EP-A1- 1 878 621
- EP-A2- 0 343 546
- DE-A1-102008 059 845

## Beschreibung

Die Erfindung betrifft ein Kraftfahrzeug mit einer Kraftfahrzeugkarosserie, wenigstens einem Stoßfängerüberzug und wenigstens einer Befestigungsvorrichtung, mit der der Stoßfängerüberzug an der Kraftfahrzeugkarosserie angebracht ist.

Derartige Befestigungsvorrichtungen können allgemein zur Halterung von Verkleidungsteilen an einer Karosserie eines Kraftfahrzeugs eingesetzt werden. Eine Befestigungsvorrichtung verbindet dementsprechend die Karosserie des Kraftfahrzeugs mit dem jeweiligen Verkleidungsteil, insbesondere einem Stoßfängerüberzug, indem eine entsprechende Befestigungsstruktur bereitgestellt wird, wodurch sichergestellt ist, dass sich das Verkleidungsteil nicht ohne äußere Einwirkung von der Karosserie lösen kann und somit verliersicher montiert ist.

Dementsprechend ist die Befestigungsvorrichtung einerseits mit der Karosserie, beispielsweise mit einem Längs- oder Querträger oder einem damit verbundenen Bauteil und andererseits mit dem Verkleidungsteil verbunden. Für gewöhnlich ist eine derartige Befestigungsvorrichtung lediglich gering deformierbar, um sicherstellen zu können, dass sich beispielsweise beim Be- oder Entladen eines Kofferraums eine Person auf einem mit der Befestigungsvorrichtung montierten heckseitigen Stoßfängerüberzug abstützen kann, ohne dass dadurch eine Deformation der Befestigungsvorrichtung verursacht wird. Allerdings besteht bei einer horizontalen Krafteinwirkung, beispielsweise durch einen Auffahrunfall, auf den heckseitigen Stoßfängerüberzug eine hohe Wahrscheinlichkeit der Beschädigung der Kraftfahrzeugkarosserie, da die Kraft durch die lediglich gering deformierbare Befestigungsvorrichtung nahezu ungedämpft direkt an die Kraftfahrzeugkarosserie weitergeleitet wird. Hierdurch kann bereits bei einem Aufprall mit geringer Geschwindigkeit auf den Stoßfängerüberzug oder ein Auffahren gegen einen Gegenstand oder dergleichen ein Schaden mit erheblichen Kosten entstehen. Ein Kraftfahrzeug mit einer Karosserie gemäß dem Oberbegriff des Anspruchs 1 ist in der DE 10 2008 059845 offenbart.

Der Erfindung liegt somit die Aufgabe zugrunde, ein Kraftfahrzeug mit einer Befestigungsvorrichtung anzugeben, die eine Beschädigung der Kraftfahrzeugkarosserie bei einem Aufprallereignis vermeidet oder abschwächt.

Zur Lösung dieser Aufgabe ist bei einem Kraftfahrzeug der eingangs genannten Art gemäß Anspruch 1 vorgesehen, dass die Befestigungsvorrichtung dreiecksförmig ist, wobei ein Halteabschnitt der Befestigungsvorrichtung mit wenigstens einem Befestigungsmittel an der Kraftfahrzeugkarosserie angebracht ist und ein Ende eines mit dem Stoßfängerüberzug gekoppelten Schwenkabschnitts der Befestigungsvorrichtung über eine Schwenkverbindung an dem Halteabschnitt angelenkt ist, wobei ein der Schwenkverbindung gegenüberliegendes Ende des Schwenkabschnitts mit einem von dem Schwenkabschnitt abgewinkelten Abstützabschnitt an dem Halteabschnitt abgestützt ist, wobei durch einen Krafteintrag auf den Stoßfängerüberzug in Kraftfahrzeuglängsrichtung die Kraft auf die Befestigungsvorrichtung übertragbar und dadurch der Abstützabschnitt deformierbar ist, wonach der Schwenkabschnitt über die Schwenkverbindung an den Halteabschnitt anklappbar ist.

Erfindungsgemäß wird somit vorgeschlagen, dass das Kraftfahrzeug über wenigstens eine Befestigungsvorrichtung verfügt, die durch die bewegliche Lagerung des Schwenkabschnitts eine Schwenkbewegung ermöglicht, durch die der Schwenkabschnitt an den Halteabschnitt anklappbar ist. Dadurch kann eine Krafteinwirkung auf den Stoßfängerüberzug in Kraftfahrzeuglängsrichtung, beispielsweise durch einen Auffahrunfall, derart kompensiert werden, dass eine Beschädigung der Kraftfahrzeugkarosserie bei einem Aufprallereignis vermieden bzw. zumindest abgeschwächt wird. Somit können die durch einen Unfall verursachten Kosten reduziert werden, da in Folge des Unfalls lediglich die Befestigungsvorichtung und gegebenenfalls der Stoßfängerüberzug beschädigt werden und instandgesetzt werden müssen, während die Kraftfahrzeugkarosserie nicht oder lediglich geringfügig beschädigt wird. Gleichzeitig ermöglicht die Schwenkverbindung ein vertikales Abstützen des Schwenkabschnitts quer zur Kraftfahrzeuglängsrichtung, wodurch sich eine hohe Vertikalsteifigkeit der Befestigungsvorrichtung ergibt und somit ein Abstützen einer Person auf dem mit der Befestigungsvorrichtung an der Kraftfahrzeugkarosserie angebrachten Stoßfängerüberzug ermöglicht, ohne dass dies eine deformierende Auswirkung auf die Befestigungsvorrichtung hat. Der Ausdruck "Krafteinwirkung in Kraftfahrzeuglängsrichtung" erfasst allgemein eine Krafteinwirkung mit einer horizontalen Kraftkomponente, die nicht zwingend parallel zur Kraftfahrzeuglängsachse liegen muss, sondern auch unter einem Winkel dazu stehen kann. Das heißt, dass auch im Fall eines schräg auf den Stoßfängerüberzug auffahrenden Fahrzeugs der Stoßfängerüberzug über die Befestigungsvorrichtung beweglich gegen die Karosserie geführt wird. Denn auch bei einer schräg zur Kraftfahrzeuglängsachse stehenden Kollisionsrichtung ist eine parallel zur Kraftfahrzeuglängsachse liegende Kraftkomponente gegeben, die auf den Stoßfängerüberzug wirkt.

Erfindungsgemäß kann die Schwenkverbindung eine Gelenk- oder Scharnierverbindung sein. Somit kann die Gelenk- oder Scharnierverbindung grundsätzlich einen Gelenkkopf und eine Gelenkpfanne umfassen, wobei es sich bei einer Scharnierverbindung um einen länglichen Gelenkkopf, der als Scharnierachse dient, und eine rinnenförmige Gelenkpfanne handeln kann, in der der längliche Gelenkkopf drehbar gelagert ist. Dabei kann der Gelenkkopf an dem Halteabschnitt und die Gelenkpfanne an dem Schwenkabschnitt oder umgekehrt angeordnet sein. Es ist auch möglich, dass die Schwenkverbindung aus mehreren zwischen dem Halteabschnitt und Schwenkabschnitt abschnittsweise angeordneten Schwenkverbindungsabschnitten besteht. Außerdem besteht erfindungsgemäß die Möglichkeit, dass es sich bei der Schwenkverbindung um ein Filmscharnier handelt, das ein flexibles Material umfasst, welches zwischen dem Halteabschnitt und dem Schwenkabschnitt angeordnet ist und an beiden Abschnitten fixiert ist.

Der Abstützabschnitt kann wenigstens eine Sollbruchstelle aufweisen oder über eine Sollbruchstelle am Halteabschnitt abgestützt sein, über die er deformierbar ist, indem die Sollbruchstelle im Falle eines Krafteintrags bricht. Bei der Sollbruchstelle kann es sich beispielsweise um eine Wandstärkenreduzierung und/oder eine Perforierung einer Wandung des Abstützabschnitts handeln. Somit ist es erfindungsgemäß auch möglich, dass die Wandstärkenreduzierung kerbenartig an einer Wandung des Abstützabschnitts angeordnet ist. Durch die Sollbruchstelle ist die Befestigungsvorrichtung somit durch einen Krafteintrag gezielt deformierbar. Folglich kann durch entsprechende Dimensionierung, Positionierung und Ausrichtung der Sollbruchstelle das Verhalten der Befestigungseinrichtung bei Krafteinwirkung auf den durch die Befestigungseinrichtung an der Kraftfahrzeugkarosserie angebrachten Stoßfängerüberzug beeinflusst werden. Dadurch besteht die Möglichkeit, dass die Befestigungsvorrichtung insbesondere bei einer Krafteinwirkung von oben, also vertikal zur Kraftfahrzeuglängsachse mit einer bestimmten Kraft, beispielsweise durch einen Benutzer des Kraftfahrzeugs, der sich von oben auf den Stoßfängerüberzug aufstützt, nicht deformierbar ist, während der betragsmäßig gleiche Krafteintrag in Kraftfahrzeuglängsrichtung zum Brechen der Sollbruchstelle und somit zur Deformation des Abstützabschnitts führt, wonach dieser vom Halteabschnitt gelöst ist und dadurch der Schwenkabschnitt an den Halteabschnitt anklappbar ist.

Erfindungsgemäß kann es vorgesehen sein, dass der Schwenkabschnitt und der Abstützabschnitt einstückig ausgebildet sind, oder dass der Abstützabschnitt über eine Schnapp- und/oder Rast- und/oder Klemmverbindung an dem Schwenkabschnitt angebunden ist, oder dass der Abstützabschnitt wenigstens ein zusätzliches über eine Schnapp- und/oder Rast- und/oder Klemmverbindung angebundenes Verbindungselement aufweist. Bei einer erfindungsgemäß einteiligen Ausgestaltung des Schwenkabschnitts und des von dem Schwenkabschnitt abgewinkelten Abstützabschnitts kann es sich beispielsweise um ein in einem Spritzgussverfahren hergestelltes Formteil aus Kunststoff handeln, das sowohl den Schwenkabschnitt als auch den Abstützabschnitt umfasst. Ist der Abstützabschnitt allerdings über eine Schnapp- und/oder Rast- und/oder Klemmverbindung an dem Schwenkabschnitt angebunden, können diese beiden Abschnitte über die jeweilige Verbindung formschlüssig aneinander gefügt sein. Somit kann im Falle einer Schnappverbindung insbesondere die Elastizität des für den Schwenkabschnitt und den Abstützabschnitt verwendeten Materials ausschlaggebend dafür sein, wieviel Kraft zum Verbinden respektive Lösen der beiden Abschnitte aufgewendet werden muss. Erfindungsgemäß kann die zum Lösen der Schnapp- und/oder Rast- und/oder Klemmverbindung benötigte Kraft beispielsweise unterschiedlich als die Kraft, die zum Brechen der Sollbruchstelle benötigt wird, gewählt sein, indem die Sollbruchstelle entsprechend dimensioniert wird, wodurch eine von der auf den Stoßfängerüberzug einwirkende Kraft abhängende mehrstufige Deformation der Befestigungsvorrichtung realisiert werden kann. Dadurch bestünde beispielsweise die Möglichkeit, dass durch eine im Vergleich zu einer ersten Kraft Fₓ größeren Kraft F_{y} sowohl eine Sollbruchstelle als auch eine Schnappverbindung der Befestigungsvorrichtung respektive des Abstützabschnitts brechbar bzw. lösbar wäre, während die Kraft Fₓ lediglich zum Lösen der Schnappverbindung geeignet ist. Umfasst der Abstützabschnitt ein zusätzliches über eine Schnapp- und/oder Rast- und/oder Klemmverbindung angebundenes Verbindungselement, kann dieses derart an dem Abstützabschnitt angeordnet sein, dass es mit beiden Enden über eine entsprechende Verbindung mit dem Abstützabschnitt verbunden und somit in diesen eingebettet ist. Es besteht grundsätzlich die Möglichkeit, dass die Sollbruchstelle direkt an dem zusätzlichen Verbindungselement angeordnet ist, worin der Vorteil besteht, dass nach einer Deformation der Befestigungsvorrichtung respektive des Abstützabschnitts gegebenenfalls lediglich das zusätzliche Verbindungselement auszutauschen wäre, um die Befestigungsvorrichtung wieder instandzusetzen.

Erfindungsgemäß kann die Sollbruchstelle als Schnapp- und/oder Rast- und/oder Klemmverbindung ausgebildet sein, wobei der Abstützabschnitt und der Halteabschnitt über die Schnapp- und/oder Rast- und/oder Klemmverbindung lösbar verbunden sind. Dadurch besteht erfindungsgemäß die Möglichkeit, dass beispielsweise bei einteiliger Ausbildung des Schwenkabschnitts mit dem Abstützabschnitt der Abstützabschnitt durch eine Schnapp- und/oder Rast- und/oder Klemmverbindung an dem Halteabschnitt festgesetzt ist. Diese Schnapp- und/oder Rast- und/oder Klemmverbindung ist durch eine in Kraftfahrzeuglängsrichtung auf den Stoßfängerüberzug und durch die auf die Befestigungsvorrichtung weitergeleitete Kraft, beispielsweise derart deformierbar, dass die Schnapp- und/oder Rast- und/oder Klemmverbindung gelöst wird und der Abstützabschnitt daraufhin durch eine an dem Halteabschnitt und gegebenenfalls eine in der Karosserie, respektive einem Bauteil an dem der Halteabschnitt montiert ist, angeordnete Öffnung hindurchgedrückt wird. Dadurch ist der Schwenkabschnitt ebenfalls an den Halteabschnitt anklappbar.

Erfindungsgemäß kann das wenigstens eine Befestigungsmittel, mit dem der Halteabschnitt an der Kraftfahrzeugkarosserie angebracht ist, eine Schraube oder ein Bolzen sein, die oder der den Halteabschnitt durchsetzen und in eine Öffnung der Kraftfahrzeugkarosserie eingeschraubt oder eingesetzt ist und/oder dass der Stoßfängerüberzug mittels Verkleben und/oder wenigstens einer Schraub- und/oder Schnapp- und/oder Rast- und/oder Klemm- und/oder Steckverbindung mit der Befestigungsvorrichtung verbunden ist. Beispielsweise kann in die Öffnung der Kraftfahrzeugkarosserie eine Gewindehülse eingesetzt sein, in die das Befestigungsmittel in Form einer Schraube eingeschraubt ist. Erfindungsgemäß ist es allerdings auch möglich, dass es sich bei der Öffnung in der Kraftfahrzeugkarosserie um eine Gewindebohrung handelt, in die das Befestigungsmittel in Form einer Schraube eingeschraubt ist, wobei zusätzlich von der der Befestigungsvorrichtung gegenüberliegenden Seite eines Bauteils, an dem die Befestigungsvorrichtung angebracht ist, bei Bedarf eine Kontermutter auf das Befestigungsmittel aufgeschraubt sein kann. Bei einem Bolzen als Befestigungsmittel kann dieser wenigstens eine Hinterschneidung aufweisen, in die eine an dem Bolzen festgesetzte Klemmvorrichtung eingreift, wenn dieser durch die Öffnung der Kraftfahrzeugkarosserie hindurchgreift, wodurch der Bolzen und somit die gesamte Befestigungsvorrichtung in ihrer Montagestellung gehalten ist.

Es liegt auch im Rahmen der Erfindung, dass der Halteabschnitt und/oder der Schwenkabschnitt Versteifungsrippen aufweist oder aufweisen. Beispielsweise kann es sich bei den Versteifungsrippen um Vertikalrippen handeln, die in der Montagestellung der Befestigungseinrichtung quer zu der Kraftfahrzeuglängsachse angeordnet sind. Zudem können diese Versteifungsrippen innen- und/oder außenliegend sein. Werden sowohl am Halteabschnitt als auch am Schwenkabschnitt innenliegende Versteifungsrippen angebracht, können die Versteifungsrippen des Schwenkabschnitts versetzt zu den Versteifungsrippen des Halteabschnitts angeordnet sein. Dadurch kann verhindert werden, dass eine Anklappbewegung des Schwenkabschnitts an den Halteabschnitt durch aufeinandertreffende Versteifungsrippen beschränkt wird. Zudem können die Versteifungsrippen jeweils einteilig mit dem Schwenkabschnitt oder dem Halteabschnitt, beispielsweise als einteiliges Spritzgussteil ausgebildet sein. Durch die Versteifungsrippen besteht die Möglichkeit, dass eine auf den Stoßfängerüberzug einwirkende und auf die Befestigungsvorrichtung weitergeleitete Kraft effektiver über die gesamte Fläche oder über zumindest einen Teil der Fläche der Befestigungsvorrichtung verteilt werden kann.

Eine Variante der Erfindung kann zudem vorsehen, dass die Schwenkverbindung entlang zumindest eines Teils der Befestigungsvorrichtung verläuft und Aussparungen aufweist, in die die Versteifungsrippen des Halteabschnitts eingreifen, wenn der Schwenkabschnitt an den Halteabschnitt angeklappt ist. Erstrecken sich die Versteifungsrippen über die gesamte Länge des Halteabschnitts, kann durch eine der Anzahl und Position der Versteifungsrippen im Bereich der Schwenkverbindung entsprechende Anzahl an Aussparungen der Schwenkverbindung verhindert werden, dass eine Anklappbewegung des Schwenkabschnitts an den Halteabschnitt durch die Versteifungsrippen beschränkt wird.

Neben dem erfindungsgemäßen Kraftfahrzeug selbst betrifft die Erfindung eine Befestigungsvorrichtung gemäß Anspruch 9 zur Anbringung eines Stoßfängerüberzugs an einem solchen Kraftfahrzeug, die sich dadurch auszeichnet, dass die Befestigungsvorrichtung dreiecksförmig ist und einen Halteabschnitt aufweist, wobei ein Ende eines Schwenkabschnitts der Befestigungsvorrichtung über eine Schwenkverbindung an dem Halteabschnitt angelenkt ist, wobei ein der Schwenkverbindung gegenüberliegendes Ende des Schwenkabschnitts mit einem von dem Schwenkabschnitt abgewinkelten Abstützabschnitt an dem Halteabschnitt abgestützt ist, wobei durch einen Krafteintrag der Abstützabschnitt deformierbar ist, wonach der Schwenkabschnitt über die Schwenkverbindung an den Halteabschnitt anklappbar ist.

Weitere Merkmale der erfindungsgemäßen Befestigungsvorrichtung ergeben sich aus den entsprechenden Unteransprüchen bzw. sind bereits voranstehend in Bezug auf das Kraftfahrzeug diskutiert.

Weitere Vorteile und Einzelheiten der Erfindung ergeben sich aus den im Folgenden beschriebenen Ausführungsbeispielen sowie anhand der Zeichnungen. Die Zeichnungen sind schematische Darstellungen und zeigen:
- Fig. 1: eine Prinzipdarstellung eines Ausführungsbeispiels eines erfindungsgemäßen Kraftfahrzeugs in einer Teilansicht;
- Fig. 2: eine Detailansicht einer Befestigungsvorrichtung des erfindungsgemäßen Kraftfahrzeugs aus Fig. 1;
- Fig. 3: eine Detailansicht eines weiteren Ausführungsbeispiels einer Befestigungsvorrichtung eines erfindungsgemäßen Kraftfahrzeugs;
- Fig. 4: eine Detailansicht eines weiteren Ausführungsbeispiels einer Befestigungsvorrichtung eines erfindungsgemäßen Kraftfahrzeugs; und
- Fig. 5: eine Detailansicht eines weiteren Ausführungsbeispiels einer Befestigungsvorrichtung eines erfindungsgemäßen Kraftfahrzeugs.

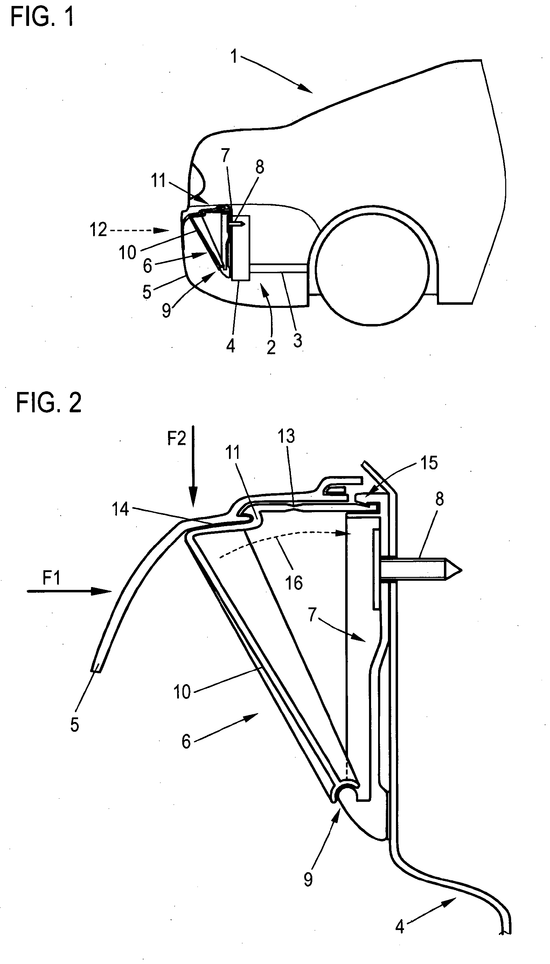

Fig. 1 zeigt ein Ausführungsbeispiel eines Kraftfahrzeugs 1 mit einer im Heckbereich angedeuteten Kraftfahrzeugkarosserie 2 in einer seitlichen Teilansicht. Die Kraftfahrzeugkarosserie 2 umfasst wiederum zwei Kraftfahrzeuglängsträger, wobei es sich hierbei um einen, in Fahrtrichtung gesehen, rechten Kraftfahrzeuglängsträger 3 und einen durch den rechten Kraftfahrzeuglängsträger 3 verdeckten, dahinterliegenden linken Kraftfahrzeuglängsträger (nicht gezeigt) handelt. Zudem umfasst die Kraftfahrzeugkarosserie 2 einen Kraftfahrzeugquerträger 4, an dem ein Stoßfängerüberzug 5 angebracht ist. Der Kraftfahrzeugquerträger ist ein Rohbauquerträger. Zur Montage des Stoßfängerüberzugs 5 an der Kraftfahrzeugkarosserie 2 ist zwischen dem Stoßfängerüberzug 5 und der Kraftfahrzeugkarosserie 2 eine Befestigungsvorrichtung 6 angeordnet, die den Stoßfängerüberzug 5 und die Kraftfahrzeugkarosserie 2 miteinander verbindet. Die Befestigungsvorrichtung umfasst einen Halteabschnitt 7, der mittels eines Befestigungsmittels 8 in Form einer Schraube an dem Kraftfahrzeugquerträger 4 festgesetzt ist, sowie einen an dem Halteabschnitt 7 über eine Schwenkverbindung 9 angelenkten Schwenkabschnitt 10, an dem wiederum an der der Schwenkverbindung 9 gegenüberliegenden Seite des Schwenkabschnitts 10 ein von dem Schwenkabschnitt 10 abgewinkelter Abstützabschnitt 11 angeordnet ist, der an dem Halteabschnitt 7 abgestützt ist. Durch einen Krafteintrag auf den Stoßfängerüberzug 5 in Kraftfahrzeuglängsrichtung entsprechend dem gestrichelten Pfeil 12 kann die Kraft vom Stoßfängerüberzug 5 an die Befestigungsvorrichtung 6 übertragen werden, wonach der Abstützabschnitt 11 der Befestigungsvorrichtung 6 durch eine an ihm angeordnete Sollbruchstelle 13, vgl. Fig. 2, in Form einer Wandstärkenreduzierung deformierbar ist, da der Krafteintrag dazu führt, dass die Sollbruchstelle 13 aufgebrochen wird. Folglich ist der Schwenkabschnitt 10 über die Schwenkverbindung 9 an den Halteabschnitt 7 anklappbar. Dementsprechend wird durch die Befestigungsvorrichtung 6 ein durch den Stoßfängerüberzug 5 an sie weitergeleiteter Krafteintrag quasi gedämpft, wodurch eine Kraftübertragung von der Befestigungsvorrichtung 6 an den Kraftfahrzeugquerträger 4 respektive die Kraftfahrzeugkarosserie 2 vermieden bzw. zumindest reduziert wird. Der Stoßfängerüberzug 5 wird dementsprechend zusammen mit dem Schwenkabschnitt 10 in Richtung des Halteabschnitts 7 bewegt, wodurch der Stoßfängerüberzug 5 quasi nachgibt und die Kraft nicht unmittelbar an die Kraftfahrzeugkarosserie 2 weitergeleitet wird.

Fig. 2 zeigt nun eine Detailansicht der Befestigungsvorrichtung 6 des Kraftfahrzeugs 1 aus Fig. 1 in einer seitlichen Schnittansicht. Neben der Befestigungsvorrichtung 6, die den Halteabschnitt 7, der über ein Befestigungselement 8 in Form einer Schraube an dem Kraftfahrzeugquerträger 4 fixiert ist, sowie den über die Schwenkverbindung 9 an dem Halteabschnitt 7 angelenkten Schwenkabschnitt 10 und den Abstützabschnitt 11 umfasst, wird in Fig. 2 zudem dargestellt, dass der Abstützabschnitt 11 einerseits an der Auflagefläche 14 mit dem Stoßfängerüberzug 5 verklebt ist und andererseits mit einer Schnappverbindung 15 an dem Halteabschnitt 7 gehalten ist. Der Stoßfängerüberzug kann an der Auflagefläche 14 alternativ oder ergänzend verrastet, verschweißt, formschlüssig oder anderweitig verbunden sein. Somit kann sich der Schwenkabschnitt 10, der mit dem Abstützabschnitt 11 einstückig ausgebildet ist, über die Schwenkverbindung 9 nicht durch eine Schwenkbewegung von dem Halteabschnitt 7 wegbewegen. Auch ein Lösen des Stoßfängerüberzugs 5 von dem Abstützabschnitt 11 ist durch weitere nicht explizit dargestellte Befestigungen nicht möglich.

Sobald durch einen Krafteintrag in Richtung des Pfeils F1 auf den Stoßfängerüberzug 5, beispielsweise durch einen Auffahrunfall, eine Kraft auf die Befestigungsvorrichtung 6 übertragen wird, bricht die an dem Abstützabschnitt 11 angeordnete Sollbruchstelle 13, sobald eine bestimmte, durch die Dimensionierung, Positionierung und Ausrichtung der Sollbruchstelle 13 festlegbare Kraftschwelle durch die Kraft erreicht wird. Daraufhin kann der Schwenkabschnitt 10 in Richtung des gestrichelten Pfeils 16 über die Schwenkverbindung 9 an den Halteabschnitt 7 angeklappt werden, wodurch die Kraft des Krafteintrags in Richtung des Pfeils F1 zumindest teilweise kompensiert wird und eine Beschädigung des hinter der Befestigungsvorrichtung 6 liegenden Kraftfahrzeugquerträgers 4 zumindest teilweise vermieden oder reduziert wird.

Bei einem Krafteintrag in Richtung des Pfeils F2 stützt sich die Befestigungsvorrichtung 6 über den über die Schwenkverbindung 9 an dem Halteabschnitt 7 angelenkten Schwenkabschnitt 10 derart ab, dass die Sollbruchstelle 13 im Gegensatz zu einem Krafteintrag in Richtung des Pfeils F1 nicht oder nur geringfügig belastet und nicht gebrochen wird. Somit weist die Befestigungsvorrichtung 6 eine derart große Vertikalsteifigkeit auf, dass sich beispielsweise ein Benutzer des Kraftfahrzeugs 1 ohne Weiteres in Richtung des Pfeils F2 an dem Stoßfängerüberzug 5 abstützen kann, ohne dass die Befestigungsvorrichtung 6 durch Brechen der Sollbruchstelle 13 deformiert wird. Demgegenüber weist die Befestigungsvorrichtung 6 durch die Sollbruchstelle 13 eine im Vergleich zur Vertikalsteifigkeit relativ geringe Horizontalsteifigkeit auf.

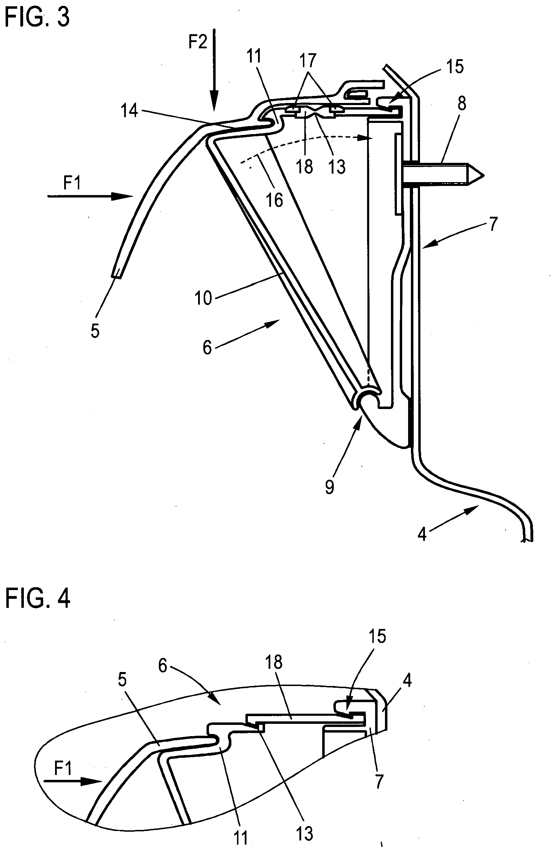

Fig. 3 zeigt ein weiteres Ausführungsbeispiel einer Befestigungsvorrichtung 6, wobei bei gleicher technischer Funktion die gleichen Bezugszeichen wie in den vorherigen Figuren übernommen wurden. Fig. 3 zeigt das weitere Ausführungsbeispiel der Befestigungsvorrichtung 6 ebenfalls in einer seitlichen Schnittansicht. Analog zu dem Ausführungsbeispiel aus Fig. 2 umfasst die Befestigungsvorrichtung 6 den Halteabschnitt 7, der über ein Befestigungselement 8 in Form einer Schraube an dem Kraftfahrzeugquerträger 4 fixiert ist. Zudem umfasst die Befestigungsvorrichtung 6 den über die Schwenkverbindung 9 an dem Halteabschnitt 7 angelenkten Schwenkabschnitt 10 und den Abstützabschnitt 11, wobei der Abstützabschnitt 11 analog zu dem vorherigen Ausführungsbeispiel einerseits an der Auflagefläche 14 auf dem Stoßfängerüberzug 5 abgestützt ist und ebenfalls wie im vorherigen Ausführungsbeispiel mit einer Schnappverbindung 15 an dem Halteabschnitt 7 gehalten ist.

Im Gegensatz zum vorherigen Ausführungsbeispiel umfasst der Abstützabschnitt 11 des in Fig. 3 gezeigten Ausführungsbeispiels ein zusätzliches über zwei weitere Schnappverbindungen 17 an dem Abstützabschnitt 11 angebundenes Verbindungselement 18. Das Verbindungselement 18 weist wiederum die Sollbruchstelle 13 auf, die sobald eine bestimmte, durch die Dimensionierung, Positionierung und Ausrichtung der Sollbruchstelle 13 festlegbare Kraftschwelle erreicht wird, gebrochen wird. Analog zum vorherigen Ausführungsbeispiel kann daraufhin der Schwenkabschnitt 10 in Richtung des gestrichelten Pfeils 16 über die Schwenkverbindung 9 an den Halteabschnitt 7 angeklappt werden. Dadurch kann die Kraft eines beispielsweise durch einen Auffahrunfall ausgelösten Krafteintrags in Richtung des Pfeils F1 zumindest teilweise kompensiert werden und eine Beschädigung des hinter der Befestigungsvorrichtung 6 liegenden Kraftfahrzeugquerträgers 4 zumindest teilweise vermieden werden. Der Vorteil eines zusätzlichen Verbindungselements 18, an dem die Sollbruchstelle 13 angeordnet ist, liegt darin, dass nach Deformation der Befestigungsvorrichtung 6 gegebenenfalls lediglich das Verbindungselement 18 ausgetauscht werden muss, um die Befestigungsvorrichtung 6 wieder instandzusetzen.

Fig. 4 zeigt ein weiteres Ausführungsbeispiel einer Befestigungsvorrichtung 6, wobei bei gleicher technischer Funktion die gleichen Bezugszeichen wie in den vorherigen Figuren verwendet wurden. Wie bereits bei den vorherigen Ausführungsbeispielen umfasst die Befestigungsvorrichtung 6 den Abstützabschnitt 11, mit dem der Stoßfängerüberzug 5 verklebt ist. Der Halteabschnitt 7 ist an dem Kraftfahrzeugquerträger 4 befestigt und über die Schnappverbindung 15 mit dem Verbindungselement 18 gekoppelt. In dem in Fig. 4 gezeigten Ausführungsbeispiel entspricht die Sollbruchstelle 13 allerdings einer Schnappverbindung, die an dem Verbindungselement 18 angeordnet ist und das Verbindungselement 18 mit dem Abstützabschnitt 11 koppelt. Bei einem Krafteintrag in Richtung des Pfeils F1 wird die Sollbruchstelle 13 in Form der Schnappverbindung gelöst und der Stoßfängerüberzug 5 kann sich zusammen mit dem Abstützabschnitt 11 am Verbindungselement 18 entlang in Richtung des Halteabschnitts 7 bewegen, wodurch der Krafteintrag zumindest teilweise kompensiert wird und eine Beschädigung des hinter der Befestigungsvorrichtung 6 liegenden Kraftfahrzeugquerträgers 4 zumindest teilweise vermieden wird.

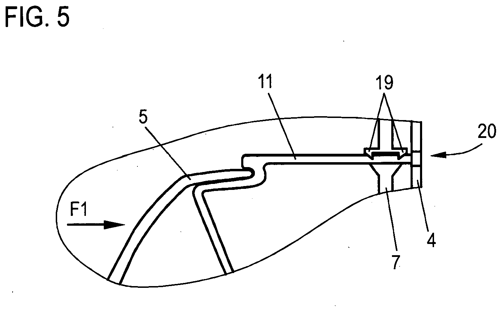

Fig. 5 zeigt ein weiteres Ausführungsbeispiel einer Befestigungsvorrichtung 6, ebenfalls unter Verwendung der gleichen Bezugszeichen, sofern die gleiche technische Funktion erfüllt wird. Die Befestigungsvorrichtung 6 unterscheidet sich von den vorherigen Ausführungsbeispielen dadurch, dass der Abstützabschnitt 11 den Halteabschnitt 7 durchsetzt und über zwei Schnappverbindungen 19 direkt mit dem Halteabschnitt 7 gekoppelt ist. Die Schnappverbindungen 19 dienen in diesem Ausführungsbeispiel als Sollbruchstelle, die durch einen Krafteintrag in Richtung des Pfeils F1 lösbar sind. Durch eine Öffnung 20 an dem hinter der Befestigungsvorrichtung 6 liegenden Kraftfahrzeugquerträger 4 ist es möglich, dass nach Lösen der Schnappverbindungen 19 der Abstützabschnitt 11 durch die Öffnung 20 geschoben wird, wodurch der Stoßfängerüberzug 5, der mit dem Abstützabschnitt 11 verklebt, verrastet, verschweißt, formschlüssig oder anderweitig verbunden ist, in Richtung des Halteabschnitts 7 bewegt wird und somit der Krafteintrag in Richtung des Pfeils F1 zumindest teilweise kompensiert werden kann, wodurch eine Beschädigung des hinter der Befestigungsvorrichtung 6 liegenden Kraftfahrzeugquerträgers 4 zumindest teilweise vermieden wird. Alternativ kann zwischen dem Kraftfahrzeugquerträger 4 und der Befestigungsvorrichtung 6 ein zusätzliches Bauteil (nicht gezeigt) angebracht sein, wobei die Befestigungsvorrichtung 6 mit dem Halteabschnitt 7 an dem zusätzlichen Bauteil angebracht ist. Dementsprechend kann die Öffnung 20, in die der Abstützabschnitt bei einer Krafteinwirkung eintaucht auch an dem zusätzlichen Bauteil angebracht sein.

## Patentansprüche

1. Kraftfahrzeug (1) mit einer Kraftfahrzeugkarosserie (2), wenigstens einem Stoßfängerüberzug (5) und wenigstens einer Befestigungsvorrichtung (6), mit der der Stoßfängerüberzug (5) an der Kraftfahrzeugkarosserie (2) angebracht ist,
**dadurch gekennzeichnet,**
**dass** die Befestigungsvorrichtung (6) dreiecksförmig ist, wobei ein Halteabschnitt (7) der Befestigungsvorrichtung (6) mit wenigstens einem Befestigungsmittel (8) an der Kraftfahrzeugkarosserie (2) angebracht ist und ein Ende eines mit dem Stoßfängerüberzug (5) gekoppelten Schwenkabschnitts (10) der Befestigungsvorrichtung (6) über eine Schwenkverbindung (9) an dem Halteabschnitt (7) angelenkt ist, wobei ein der Schwenkverbindung (9) gegenüberliegendes Ende des Schwenkabschnitts (10) mit einem von dem Schwenkabschnitt (9) abgewinkelten Abstützabschnitt (11) an dem Halteabschnitt (7) abgestützt ist, wobei durch einen Krafteintrag auf den Stoßfängerüberzug (5) in Kraftfahrzeuglängsrichtung die Kraft auf die Befestigungsvorrichtung (6) übertragbar und dadurch der Abstützabschnitt (11) deformierbar ist, wonach der Schwenkabschnitt (10) über die Schwenkverbindung (9) an den Halteabschnitt (7) anklappbar ist.

2. Kraftfahrzeug nach Anspruch 1,
**dadurch gekennzeichnet,**
**dass** die Schwenkverbindung (9) eine Gelenk- oder Scharnierverbindung ist.

3. Kraftfahrzeug nach Anspruch 1 oder 2,
**dadurch gekennzeichnet,**
**dass** der Abstützabschnitt (11) wenigstens eine Sollbruchstelle (13) aufweist oder über eine Sollbruchstelle (13) am Halteabschnitt abgestützt ist, über die er deformierbar ist, indem die Sollbruchstelle (13) brechbar ist.

4. Kraftfahrzeug nach einem der vorangehenden Ansprüche,
**dadurch gekennzeichnet,**
**dass** der Schwenkabschnitt (10) und der Abstützabschnitt (11) einstückig ausgebildet sind, oder dass der Abstützabschnitt (11) über eine Schnapp- und/oder Rast- und/oder Klemmverbindung an dem Schwenkabschnitt (10) angebunden ist, und/oder dass der Abstützabschnitt (11) wenigstens ein zusätzliches über eine Schnapp- und/oder Rast- und/oder Klemmverbindung (17) angebundenes Verbindungselement (18) aufweist.

5. Kraftfahrzeug nach einem der vorangehenden Ansprüche,
**dadurch gekennzeichnet,**
**dass** die Sollbruchstelle (13) als Schnapp- und/oder Rast- und/oder Klemmverbindung ausgebildet ist, wobei der Abstützabschnitt (11) und der Halteabschnitt (7) über die Schnapp- und/oder Rast- und/oder Klemmverbindung lösbar verbunden sind.

6. Kraftfahrzeug nach einem der vorangehenden Ansprüche,
**dadurch gekennzeichnet,**
**dass** das wenigstens eine Befestigungsmittel (8) eine Schraube oder ein Bolzen ist, die oder der den Halteabschnitt (7) durchsetzt und in eine Öffnung der Kraftfahrzeugkarosserie (2) eingeschraubt oder eingesetzt ist und/oder dass der Stoßfängerüberzug (5) mittels Verkleben und/oder wenigstens einer Schraub- und/oder Schnapp- und/oder Rast- und/oder Klemm- und/oder Steckverbindung mit der Befestigungsvorrichtung (6) verbunden ist.

7. Kraftfahrzeug nach einem der vorangehenden Ansprüche,
**dadurch gekennzeichnet,**
**dass** der Halteabschnitt (7) und/oder der Schwenkabschnitt (10) Versteifungsrippen aufweist oder aufweisen.

8. Kraftfahrzeug nach Anspruch 7,
**dadurch gekennzeichnet,**
**dass** die Schwenkverbindung (9) entlang zumindest eines Teils der Befestigungsvorrichtung (6) verläuft und Aussparungen aufweist, in die die Versteifungsrippen des Halteabschnitts (7) eingreifen, wenn der Schwenkabschnitt (10) an den Halteabschnitt (7) angeklappt ist.

9. Befestigungsvorrichtung (6) zur Anbringung eines Stoßfängerüberzugs (5) an einem Kraftfahrzeug (1) nach einem der Ansprüche 1 bis 8,
**dadurch gekennzeichnet,**
**dass** die Befestigungsvorrichtung (6) dreiecksförmig ist und einen Halteabschnitt (7) aufweist, wobei ein Ende eines Schwenkabschnitts (10) der Befestigungsvorrichtung (6) über eine Schwenkverbindung (9) an dem Halteabschnitt (7) angelenkt ist, wobei ein der Schwenkverbindung (9) gegenüberliegendes Ende des Schwenkabschnitts (10) mit einem von dem Schwenkabschnitt (10) abgewinkelten Abstützabschnitt (11) an dem Halteabschnitt (7) abgestützt ist, wobei durch einen Krafteintrag der Abstützabschnitt (11) deformierbar ist, wonach der Schwenkabschnitt (10) über die Schwenkverbindung (9) an den Halteabschnitt (7) anklappbar ist.

10. Befestigungsvorrichtung nach Anspruch 9,
**dadurch gekennzeichnet,**
**dass** die Schwenkverbindung (9) eine Gelenk- oder Scharnierverbindung ist.

11. Befestigungsvorrichtung nach Anspruch 9 oder 10,
**dadurch gekennzeichnet,**
**dass** der Abstützabschnitt (11) wenigstens eine Sollbruchstelle (13) aufweist oder über eine Sollbruchstelle (13) am Halteabschnitt abgestützt ist, über die er deformierbar ist, indem die Sollbruchstelle (13) brechbar ist.

12. Befestigungsvorrichtung nach einem der Ansprüche 9 bis 11,
**dadurch gekennzeichnet,**
**dass** der Schwenkabschnitt (10) und der Abstützabschnitt (11) einstückig ausgebildet sind, oder dass der Abstützabschnitt (11) über eine Schnapp- und/oder Rast- und/oder Klemmverbindung an dem Schwenkabschnitt (10) angebunden ist, und/oder dass der Abstützabschnitt (11) wenigstens ein zusätzliches über eine Schnapp- und/oder Rast- und/oder Klemmverbindung (17) angebundenes Verbindungselement (18) aufweist.

13. Befestigungsvorrichtung nach einem der Ansprüche 9 bis 12,
**dadurch gekennzeichnet,**
**dass** die Sollbruchstelle (13) als Schnapp- und/oder Rast- und/oder Klemmverbindung ausgebildet ist, wobei der Abstützabschnitt (11) und der Halteabschnitt (7) über die Schnapp- und/oder Rast- und/oder Klemmverbindung lösbar verbunden sind.

14. Befestigungsvorrichtung nach einem der Ansprüche 9 bis 13,
**dadurch gekennzeichnet,**
**dass** der Halteabschnitt (7) und/oder der Schwenkabschnitt (10) Versteifungsrippen aufweist oder aufweisen.

15. Befestigungsvorrichtung nach Anspruch 14,
**dadurch gekennzeichnet,**
**dass** die Schwenkverbindung (9) entlang zumindest eines Teils der Befestigungsvorrichtung (6) verläuft und Aussparungen aufweist, in die die Versteifungsrippen des Halteabschnitts (7) eingreifen, wenn der Schwenkabschnitt (10) an den Halteabschnitt (7) angeklappt ist.

## Claims

1. Motor vehicle (1) with a motor vehicle chassis (2), at least one bumper cover (5) and at least one fastening device (6), with which the bumper cover (5) is attached to the motor vehicle chassis (2),
**characterised in that** the fastening device (6) is triangular in shape, wherein a holding portion (7) of the fastening device (6) with at least one fastening means (8) attached to the motor vehicle chassis (2) and one end of a swivel portion (10) of the fastening device (6) coupled to the bumper cover (5) is articulated to the holding portion (7) via a swivel connection (9), wherein one end of the swivel portion (10) opposite the swivel connection (9) is supported on the holding portion (7) by a support portion (11) angled away from the swivel portion (9), wherein by an application of force on the bumper cover (5) in the vehicle longitudinal direction, the force on the fastening device (6) transferable and thereby the support portion (11) is deformable, according to which the swivel portion (10) is capable of folding over the swivel connection (9) on the holding portion (7).

2. Motor vehicle according to claim 1,
**characterised in that** the swivel connection (9) is a hinge or hinged connection.

3. Motor vehicle according to claim 1 or 2,
**characterised in that** the support portion (11) at least has a predetermined breaking point (13) or is supported through a predetermined breaking point (13) on the holding portion through which it is deformable **in that** the predetermined breaking point (13) is breakable.

4. Motor vehicle according to one of the preceding claims,
**characterised in that** the swivel portion (10) and the support portion (11) are integrally formed, or that the support portion (11) is attached by means of a snap-in and / or latching and / or clamping connection to the swivel portion (10), and / or that the support portion (11) has at least one additional connection element (18) attached via a snap-in and / or latching and / or clamping connection (17).

5. Motor vehicle according to one of the preceding claims
**characterised in that** the predetermined breaking point (13) is designed as a snap-in and / or latching and / or clamping connection, wherein the support portion (11) and the holding portion (7) are detachably connected via the snap-in and / or detent and / or clamp connection.

6. Motor vehicle according to one of the preceding claims,
**characterised in that** the at least one fastening means (8) is a screw or a bolt that passes through the holding portion (7) and is screwed or inserted into an opening of the motor vehicle chassis (2) and / or the bumper cover (5) is connected to the fastening device (6) by means of gluing and / or at least one screw and / or snap-in and / or latching and / or clamping and / or plug-in connection.

7. Motor vehicle according to one of the preceding claims,
**characterised in that** the holding portion (7) and / or the swivel portion (10) has or have stiffening ribs.

8. Motor vehicle according to claim 7,
**characterised in that** the swivel connection (9) extends along at least a part of the fastening device (6) and has recesses into which the stiffening ribs of the holding portion (7) interlock when the swivel portion (10) is folded on the holding portion (7).

9. Fastening device (6) for mounting a bumper cover (5) on a motor vehicle (1) according to one of claims 1 to 8,
**characterised in that** the fastening device (6) is triangular in shape and has a holding portion (7), one end of a swivel portion (10) of the fastening device (6) is articulated to the holding portion (7) via a swivel connection (9), wherein an end of the swivel portion (10) opposite the swivel connection (9) interlocks with a supporting portion (11) angled away from the swivel portion (10) being supported by the support portion (7), wherein by a force input, the support portion (11) is deformable, according to which the swivel portion (10) can be folded over the swivel connection (9) on the holding portion (7).

10. Fastening device according to claim 9,
**characterised in that** the swivel connection (9) is a hinge or hinged connection.

11. Fastening device according to claim 9 or 10,
**characterised in that** the support portion (11) at least has a predetermined breaking point (13) or is supported through a predetermined breaking point (13) on the holding portion through which it is deformable **in that** the predetermined breaking point (13) is breakable.

12. Fastening device according to one of claims 9 to 11,
**characterised in that** the swivel portion (10) and the support portion (11) are integrally formed, or that the support portion (11) is attached by means of a snap-in and / or latching and / or clamping connection to the swivel portion (10), and / or that the support portion (11) has at least one additional connection element (18) attached via a snap-in and / or latching and / or clamping connection (17).

13. Fastening device according to one of claims 9 to 12
**characterised in that** the predetermined breaking point (13) is designed as a snap-in and / or latching and / or clamping connection, wherein the support portion (11) and the holding portion (7) are detachably connected via the snap-in and / or detent and / or clamp connection.

14. Fastening device according to one of claims 9 to 13
**characterised in that** the holding portion (7) and / or the swivel portion (10) has or have stiffening ribs.

15. Fastening device according to claim 14,
**characterised in that** the swivel connection (9) extends along at least a part of the fastening device (6) and has recesses into which the stiffening ribs of the holding portion (7) interlock when the swivel portion (10) is folded on the holding portion (7).

## Revendications

1. Véhicule automobile (1) avec une carrosserie de véhicule automobile (2), avec au moins un habillage de pare-chocs (5) et avec au moins un dispositif de fixation (6) avec lequel de pare-chocs (5) est monté sur la carrosserie de véhicule automobile (2),
**caractérisé en ce que** le dispositif de fixation (6) est triangulaire,
dans lequel un tronçon de maintien (7) du dispositif de fixation (6) est monté sur la carrosserie de véhicule automobile (2) avec au moins un moyen de fixation (8) et une extrémité d'un tronçon de pivotement (10), couplé à l'habillage de pare-chocs (5), du dispositif de fixation (6) est articulée sur le tronçon de maintien (7) par l'intermédiaire d'une liaison pivotante (9),
dans lequel une extrémité, opposée à la liaison pivotante (9), du tronçon de pivotement (10) est supportée au niveau du tronçon de maintien (7) par l'intermédiaire d'un tronçon de support (11) coudé par rapport au tronçon de pivotement (9)
dans lequel, lorsqu'une force est exercée sur l'habillage de pare-chocs (5) dans la direction longitudinale de véhicule automobile, la force peut être transmise au dispositif de fixation (6) et le tronçon de support (11) peut ainsi être déformé, à la suite de quoi le tronçon de pivotement (10) peut être rabattu sur le tronçon de maintien (7) par l'intermédiaire de la liaison pivotante (9).

2. Véhicule automobile selon la revendication 1,
**caractérisé en ce que** la liaison pivotante (9) est une liaison articulée ou à charnière.

3. Véhicule automobile selon la revendication 1 ou 2,
**caractérisé en ce que** le tronçon de support (11) comporte au moins un point destiné à la rupture (13) ou est supporté au niveau du tronçon de maintien par l'intermédiaire d'un point destiné à la rupture (13) par l'intermédiaire duquel il est déformable, du fait que le point destiné à la rupture (13) peut être brisé.

4. Véhicule automobile selon l'une quelconque des revendications précédentes,
**caractérisé en ce que** le tronçon de pivotement (10) et le tronçon de support (11) sont réalisés d'une seule pièce ou **en ce que** le tronçon de support (11) est attaché au tronçon de pivotement (10) par l'intermédiaire d'une liaison par enclenchement et/ou par crantage et/ou par serrage et/ou **en ce que** le tronçon de support (11) comporte au moins un élément de liaison (18) supplémentaire attaché par l'intermédiaire d'une liaison par enclenchement et/ou par crantage et/ou par serrage (17).

5. Véhicule automobile selon l'une quelconque des revendications précédentes,
**caractérisé en ce que** le point destiné à la rupture (13) est réalisé comme une liaison par enclenchement et/ou par crantage et/ou par serrage, le tronçon de support (11) et le tronçon de maintien (7) étant reliés de manière amovible par l'intermédiaire de la liaison par enclenchement et/ou par crantage et/ou par serrage.

6. Véhicule automobile selon l'une quelconque des revendications précédentes,
**caractérisé en ce que** l'au moins un moyen de fixation (8) est une vis ou un axe qui traverse le tronçon de maintien (7) et qui est vissé ou placé dans une ouverture de la carrosserie de véhicule (2) et/ou **en ce que** l'habillage de pare-chocs (5) est relié au dispositif de fixation (6) au moyen d'un collage et/ou d'au moins une liaison par vissage et/ou par enclenchement et/ou par crantage et/ou par serrage et/ou par enfichage.

7. Véhicule automobile selon l'une quelconque des revendications précédentes,
**caractérisé en ce que** le tronçon de maintien (7) et/ou le tronçon de pivotement (10) comportent des nervures de renfort.

8. Véhicule automobile selon la revendication 7,
**caractérisé en ce que** la liaison pivotante (9) s'étend le long d'au moins une partie du dispositif de fixation (6) et comporte des évidements dans lesquels les nervures de renfort du tronçon de maintien (7) pénètrent lorsque le tronçon de pivotement (10) est rabattu sur le tronçon de maintien (7).

9. Dispositif de fixation (6) destiné à monter un habillage de pare-chocs (5) sur un véhicule automobile (1) selon l'une quelconque des revendications 1 à 8,
**caractérisé en ce que** le dispositif de fixation (6) est triangulaire et comporte un tronçon de maintien (7),
dans lequel une extrémité d'un tronçon de pivotement (10) du dispositif de fixation (6) est articulée sur le tronçon de maintien (7) par l'intermédiaire d'une liaison pivotante (9),
dans lequel une extrémité, opposée à la liaison pivotante (9), du tronçon de pivotement (10) est supportée au niveau du tronçon de maintien (7) par l'intermédiaire d'un tronçon de support (11) coudé par rapport au tronçon de pivotement (10)
dans lequel le tronçon de support (11) peut être déformé par l'action d'une force, à la suite de quoi le tronçon de pivotement (10) peut être rabattu sur le tronçon de maintien (7) par l'intermédiaire de la liaison pivotante (9).

10. Dispositif de fixation selon la revendication 9,
**caractérisé en ce que** la liaison pivotante (9) est une liaison articulée ou à charnière.

11. Dispositif de fixation selon la revendication 9 ou 10,
**caractérisé en ce que** le tronçon de support (11) comporte au moins un point destiné à la rupture (13) ou est supporté au niveau du tronçon de maintien par l'intermédiaire d'un point destiné à la rupture (13) par l'intermédiaire duquel il est déformable, du fait que le point destiné à la rupture (13) peut être brisé.

12. Dispositif de fixation selon l'une quelconque des revendications 9 à 11,
**caractérisé en ce que** le tronçon de pivotement (10) et le tronçon de support (11) sont réalisés d'une seule pièce ou **en ce que** le tronçon de support (11) est attaché au tronçon de pivotement (10) par l'intermédiaire d'une liaison par enclenchement et/ou par crantage et/ou par serrage et/ou **en ce que** le tronçon de support (11) comporte au moins un élément de liaison (18) supplémentaire attaché par l'intermédiaire d'une liaison par enclenchement et/ou par crantage et/ou par serrage (17).

13. Dispositif de fixation selon l'une quelconque des revendications 9 à 12,
**caractérisé en ce que** le point destiné à la rupture (13) est réalisé comme une liaison par enclenchement et/ou par crantage et/ou par serrage, le tronçon de support (11) et le tronçon de maintien (7) étant reliés de manière amovible par l'intermédiaire de la liaison par enclenchement et/ou par crantage et/ou par serrage.

14. Dispositif de fixation selon l'une quelconque des revendications 9 à 13,
**caractérisé en ce que** le tronçon de maintien (7) et/ou le tronçon de pivotement (10) comportent des nervures de renfort.

15. Véhicule automobile selon la revendication 14,
**caractérisé en ce que** la liaison pivotante (9) s'étend le long d'au moins une partie du dispositif de fixation (6) et comporte des évidements dans lesquels les nervures de renfort du tronçon de maintien (7) pénètrent lorsque le tronçon de pivotement (10) est rabattu sur le tronçon de maintien (7).
